(19) Europäisches Patentamt
European Patent Office
Office européen des brevets

(11) **EP 0 847 496 B1**

(12) **EUROPÄISCHE PATENTSCHRIFT**

(45) Veröffentlichungstag und Bekanntmachung des Hinweises auf die Patenterteilung:
**09.08.2000  Patentblatt 2000/32**

(21) Anmeldenummer: **96930129.0**

(22) Anmeldetag: **29.08.1996**

(51) Int Cl.⁷: **F03D 7/04**, F03D 7/02

(86) Internationale Anmeldenummer:
**PCT/EP96/03801**

(87) Internationale Veröffentlichungsnummer:
**WO 97/09531 (13.03.1997 Gazette 1997/12)**

(54) **VERFAHREN ZUM BETREIBEN EINER WINDENERGIEANLAGE**

METHOD OF OPERATING A WIND POWER STATION

PROCEDE PERMETTANT D'ACTIONNER UNE CENTRALE EOLIENNE

(84) Benannte Vertragsstaaten:
**DE DK ES GB GR IE PT**

(30) Priorität: **01.09.1995  DE 19532409**

(43) Veröffentlichungstag der Anmeldung:
**17.06.1998  Patentblatt 1998/25**

(73) Patentinhaber: **Wobben, Aloys**
**26607 Aurich (DE)**

(72) Erfinder: **Wobben, Aloys**
**26607 Aurich (DE)**

(74) Vertreter: **Eisenführ, Speiser & Partner**
**Martinistrasse 24**
**28195 Bremen (DE)**

(56) Entgegenhaltungen:
**EP-A- 0 266 715**

• **E.W.GOLDING: "The generation of electricity by wind power." 1976 , SPON LTD , LONDON,GB XP002021258 siehe Seite 212 - Seite 213**
• **WIND ENERGY CONVERSION 1995. PROCEEDINGS OF THE 17TH BRITISH WIND ENERGY ASSOCIATION CONFERENCE, PROCEEDINGS OF 17TH ANNUAL CONFERENCE. BRITISH WIND ENERGY ASSOCIATION, WARWICK, UK, 19-21 JULY 1995, ISBN 0-85298-961-X, 1995, BURY ST. EDMUNDS, UK, MECH. ENG. PUBLICATIONS, UK, Seiten 243-248, XP000612993 CARDENAS R ET AL: "Adaptive pitch control for variable speed wind turbines"**
• **PROCEEDINGS OF THE 22ND IEEE CONFERENCE ON DECISION AND CONTROL, SAN ANTONIO, TX, USA, 14-16 DEC. 1983, 1983, NEW YORK, NY, USA, IEEE, USA, Seiten 1417-1421 vol.3, XP000612992 LYONS J P JR ET AL: "The control of variable-speed wind turbine generators"**

## Beschreibung

Die Erfindung betrifft ein Verfahren zum Betreiben einer pitchgeregelten Windenergieanlage. Weiter betrifft die Erfindung eine zugehörige Windenergieanlage.

Die Rotorblätter des Rotors einer Windenergieanlage werden durch den auf sie wirkenden Staudruck belastet, der von den herrschenden Windverhältnissen, insbesondere von der Windgeschwindigkeit des herrschenden Windes abhängt. Dieses Abhängigkeitsverhältnis ergibt sich aus:

$$(1) \qquad q = \frac{\rho}{2} \cdot v^2,$$

wobei q der wirksame Staudruck, p die Luftdichte und v zunächst einmal die Anströmgeschwindigkeit des Windes am Profil ist.

Die Anströmgeschwindigkeit v setzt sich vektoriell aus der tatsächlichen Windgeschwindigkeit $v_w$ und der örtlichen Umfangsgeschwindigkeit $v_u$ an einem Ort des Rotorblattes zusammen.

Dabei ist:

$$(2) \qquad v_U = r \cdot 2\pi \cdot \frac{n}{60},$$

wobei n die Rotordrehzahl ist und r der betrachtete Rotorradius ist.

Für den Fall, daß die tatsächliche Windgeschwindigkeit $v_w$ senkrecht zur Umfangsgeschwindigkeit $v_u$ steht, der herrschende Wind also frontal bzw. axial auf den Rotor der Windenergieanlage bläst, ergibt sich mit Hilfe des Satzes von Pythagoras:

$$(3) \qquad v = \sqrt{v_U^2 + v_w^2}.$$

In diesem Falle ist außerdem der Anströmwinkel $\alpha$, also der Winkel zwischen der Anströmgeschwindigkeit v und der Umfangsgeschwindigkeit $v_u$ zu berechnen aus:

$$(4) \qquad \tan \alpha = \frac{v_w}{v_U}.$$

Die am Blattprofil wirkende Kraft wird mit den Profilpolaren ermittelt, nämlich als:

$$(5) \qquad F_A = q \cdot A \cdot c_\alpha,$$

wobei $F_A$ die auf das Blattprofil wirkende Kraft ist, q der wirksame Staudruck ist, A die angeströmte Fläche bzw. Bezugsfläche des Rotorblattes ist und $c_\alpha$ die Profilpolare als Funktion des Anströmwinkels $\alpha$ ist.

In dem hier interessierenden Bereich kann die Profilpolare $c_\alpha$ annähernd linear beschrieben werden als:

$$(6) \qquad c_\alpha = \text{konst} \cdot \alpha,$$

bzw. für kleine Winkel (im Bogenmaß):

$$(7) \qquad \alpha(v_w <\!\!< v_U): \tan \alpha \approx \alpha .$$

Daraus folgt mit Gleichung (4):

$$(8) \qquad c_\alpha = \text{konst.} \frac{v_w}{v_U} .$$

Weiter folgt mit Gleichung (5):

$$(9) \qquad F_A = \frac{\rho}{2} \cdot (v_U^2 + v_w^2) \cdot A \cdot konst \cdot \frac{v_w}{v_U} ,$$

bzw. unter Zusammenfassung der konstanten Glieder:

$$(10) \qquad F_A = konst \cdot (v_w^2 + v_u^2) \cdot \frac{v_w}{v_U} .$$

Natürlich steht der Geschwindigkeitsvektor des anströmenden Windes $v_w$ nicht immer senkrecht auf der Umfangsgeschwindigkeit $v_u$, so daß Gleichung (3) nicht immer gilt. Die vorhergehenden Gleichungen lassen jedoch zumindest qualitativ Abhängigkeiten der verschiedenen Parameter von einander erkennen.

Insbesondere ist aus der Gleichung (1) zu entnehmen, daß der den Rotor der Windenergieanlage beslastende wirksame Staudruck q quadratisch von der Anströmgeschwindigkeit v abhängt.

Die jeweilige Windenergieanlage kann also ab einer bestimmten maximalen Anströmgeschwindigkeit $v_{max}$ ihre Belastungsgrenze erreichen.

Es ist aus Robert Gasch: "Windkraftanlagen", B. G. Teubner Stuttgart, 1933, S. 303 ff. und Erich Hau: "Windkraftanlagen", Springer-Verlag, Berlin Heidelberg New York London Paris Tokyo, 1988 S. 323 f., S. 330 ff. bekannt, zur Begrenzung der Belastung einer Windenergieanlage im Sinne des Verfahrens der eingangs genannten Gattung eine Windenergieanlage bei Erreichen einer maximalen Windgeschwindigkeit $v_{wmax}$ abzuschalten. Insbesondere bei Windparks führt eine solche Abschaltung, bei der alle Windnenergieanlagen des Windparks bei Erreichen der Abschaltgeschwindigkeit nahezu zeitgleich abschalten, bzw. das Wiederanschalten nach einer solchen Abschaltung bei nachlassendem Wind zu starken Leistungsgradienten, die sich durch eine plötzliche Spannungsänderung im elektrischen Netz, an dem diese Windenergieanlagen angeschlossen sind, bemerkbar machen.

Aus EP-A2-0 266 715 ist eine Windenergieanlage mit einen passiven Pitchregelung bekannt, bei welcher bei konstanten Drehzahl die Leistung der Windenergieanlage bei steigender Windgeschwindigkeit reduziert wird.

Der Erfindung liegt die Aufgabe zugrunde, den Ertrag einer Windenergieanlage zu erhöhen und dennoch die Belastung der Windenergieanlage bei höheren Windgeschwindigkeiten zu begrenzen.

Diese Aufgabe wird erfindungsgemäß durch ein Verfahren nach Anspruch 1 und eine Windenergieanlage nach Anspruch 4 gelöst.

Aus den obengenannten Gleichungen (1), (3) und (10) ist, jedenfalls qualitativ, erkennbar, daß der das Rotorblatt belastende Staudruck, ebenso wie die am Blattprofil wirkende und somit das Rotorblatt belastende Kraft, jeweils von der Umfangsgeschwindigkeit $v_u$ und somit also von der Betriebsdrehzahl des Rotors abhängt. Zur Begrenzung der Belastung des Rotors der Windenergieanlage kann also bei steigender Windgeschwindigkeit $v_w$ bzw. bei einer ungünstigen Anströmrichtung (je nachdem, welcher Parameter als Meßgröße genommen wird), die jeweils zum ungünstigen Anwachsen der resultierenden Anströmgeschwindigkeit v führen könnten, einem Anwachsen der Belastung durch eine Reduzierung der Drehzahl, also der Umfangsgeschwindigkeit, des Rotors entgegengewirkt werden.

Anders als bisher vorgesehen, wird also erfindungsgemäß mit Vorteil nicht die Windenergieanlage bei Erreichen einer Grenzgeschwindigkeit vollständig abgeschaltet werden und diese Grenzgeschwindigkeit also als Abschaltgeschwindigkeit definiert, sondern die Windenergieanlage wird lediglich zwangsweise in ihrer Betriebsdrehzahl reduziert, sobald die Anströmgeschwindigkeit v über den Wert der Grenzgeschwindigkeit anwächst. Die Windenergieanlage kann also oberhalb der üblichen "Abschaltgeschwindigkeit" weiter betrieben werden, wodurch ihre Leistungskennlinie zu größeren Windgeschwindigkeiten verlängert und der Energieertrag und die Netzverträglichkeit der Windenergieanlage verbessert werden. Insbesondere können durch die zwangsweise Betriebsdrehzahlreduzierung bei pitchgeregelten Windenergieanlagen die Belastungen durch die Erfindung in günstiger Weise begrenzt werden. Es werden durch die Erfindung zu starke, wechselnde Belastungen der Rotorblätter und damit zu unsymmetrische, pulsierende Belastungen der ganzen Anlage, die mit steigender Windgeschwindigkeit zunehmen, vermieden.

Möglichkeiten zur Betriebsdrehzahlreduzierung sind für andere als den erfinderischen Zweck an sich hinreichend bekannt. Eine Reduzierung der Betriebsdrehzahl kann bei einer pitchgeregelten Windenergieanlage z.B. einfach durch eine aktive Blattverstellung erreicht werden. Dies bedeutet, daß durch Änderung des Anstellwinkels des Blattprofiles des Rotors der Auftrieb am Rotorblatt beeinflußt wird, und damit eine Reduzierung der Rotordrehzahl erzielt werden kann. In Verbindung mit einem drehzahlvariabel betriebenen Antriebsstrang, z. B. für einen Pumpenbetrieb, die Netzeinspeisung über Wechselrichter oder dgl., wird weiterhin ein Produktionsbetrieb ermöglicht.

Eine Weiterbildung des erfindungsgemäßen Verfahrens sieht vor, daß die Drehzahl des Rotors derart reduziert wird, daß das auf den Rotor der Windenergieanlage wirkende Belastungsniveau bei steigender Windgeschwindigkeit oberhalb der Grenzgeschwindigkeit annähernd konstant bleibt oder reduziert wird. Auf diese Weise kann vermieden werden, daß der Antriebsstrang der Windenergieanlage überlastet wird. Gleichzeitig wird hierdurch bei steigender Windgeschwindigkeit die abgegebene Leistung gedrosselt.

Eine erfindungsgemäße Windenergieanlage zeichnet sich durch eine Einrichtung aus, die eine automatische Durchführung des erfindungsgemäßen Verfahrens gewährleistet.

In der Zeichnung sind beispielhafte Erläuterungen zur Erfindung dargestellt. Es zeigen:

Fig. 1   eine Leistungs- bzw. Drehzahlkennlinie einer erfindungsgemäßen Windenergieanlage als Funktion der Windgeschwindigkeit,

Fig. 2   eine Vektordarstellung zur Erläuterung der Anströmgeschwindigkeit an einem Rotorblatt einer Windenergieanlage und

Fig. 3   eine typische Profilpolare.

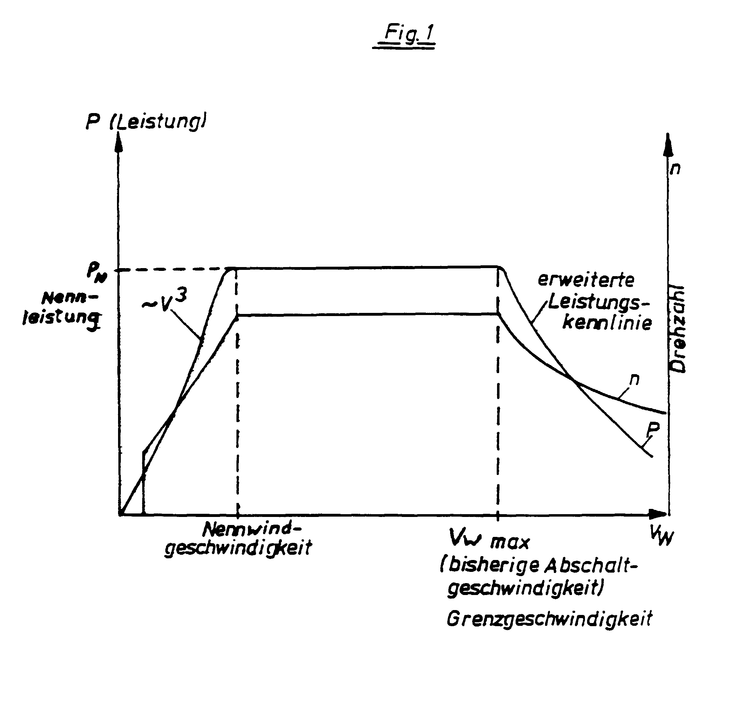

Die Fig. 1 gibt die Leistungskennlinie und die Drehzahlkennlinie einer erfindungsgemäß betriebenen Windenergieanlage als Funktion der Windgeschwindigkeit $v_w$ wieder.

In der Figur sind die Leistung P und die Drehzahl n der Windenergieanlage gegenüber der Windgeschwindigkeit $v_w$ aufgetragen. Die Leistung P soll bis zum Erreichen einer bestimmten Nenngeschwindigkeit relativ schnell ansteigen und dann bis zum Erreichen einer Grenzgeschwindigkeit $v_{wmax}$, der bisherigen Abschaltwindgeschwindigkeit, möglichst konstant gehalten werden. Bei bisheriger Betriebsweise einer Windenergieanlage würde die Leistungskennlinie bei Erreichen der Grenzgeschwindigkeit $v_{wmax}$ abbrechen, weil die Windenergieanlage an dieser Stelle abgeschaltet würde. Die in der Figur gezeigte Leistungskennlinie einer erfindungsgemäß betriebenen Windenergieanlage zeigt jedoch einen erweiterten Leistungskennlinienbereich, der über die Grenzgeschwindigkeit $v_{wmax}$, die frühere Abschaltgeschwindigkeit, hinausführt. Es ist erkennbar, daß in dem Windgeschwindigkeitsbereich oberhalb der früheren Abschaltgeschwindigkeit jetzt die Leistung bzw. die Drehzahl lediglich gedrosselt wird, so daß die Belastung der Windenergieanlage in diesem Windgeschwindigkeitsbereich begrenzt ist und dennoch ein Weiterbetrieb der Windenergieanlage erfolgt.

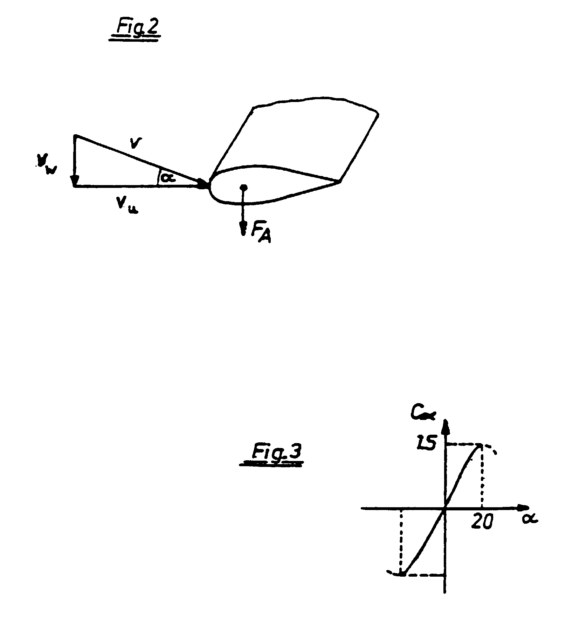

Die Fig. 2 zeigt eine Vektordarstellung zur Erläuterung der Anströmgeschwindigkeit an einem Rotorblatt einer Windenergieanlage. Diese Figur dient insbesondere zur Erläuterung der in der Beschreibungseinleitung gegebenen Gleichungen (3) - (5).

Eine weitere Erläuterung der in der Beschreibungseinleitung gegebenen Gleichungen (5) - (8) liefert die Fig. 3, die eine typische Profilpolare zeigt.

## Patentansprüche

1. Verfahren zum Betreiben einer Windenergieanlage mit Pitchregelung, wobei die Leistung der Windenergieanlage wie auch die Betriebsdrehzahl des Rotors ab Erreichen einer die Windenergieanlage überlastungs gefährenden Windgeschwindigkeit abhängig vom Anstieg der Wind- oder Anströmgeschwindigkeit komt:in which reduziert wird.

2. Verfahren nach Anspruch 1,
dadurch gekennzeichnet, dass die Betriebsdrehzahl (n) des Rotors derart reduziert wird, dass das auf den Rotor der Windenergieanlage wirkende Belastungsniveau bei steigender Windgeschwindigkeit oberhalb der überlastungs gefährenden der Windgeschwindigkeit annähernd konstant bleibt oder reduziert wird.

3. Verfahren nach Anspruch 1 oder 2,
dadurch gekennzeichnet, dass die Betriebsdrehzahlreduzierung mit einer auf das Belastungsniveau abgestimmten Leistungsänderung verbunden ist.

4. Windenergieanlage mit Pitchregelung,
gekennzeichnet durch eine Einrichtung zur automatischen Leistungs- und Rotorbetriebszahlminderung ab Erreichen einer die Windenergieanlage überlastungs gefährenden Windgeschwindigkeit abhängig vom Anstieg der Wind- oder Anströmgeschwindigkeit bzw. der wahren oder relativen Windgeschwindigkeit.

## Claims

1. Method of operating a wind turbine with pitch control, in which the power of the wind turbine as well as the operating speed of the rotor is continuously reduced when a wind velocity is reached which is in danger of overloading the wind turbine, in dependence on the rise in the wind velocity or incident-stream velocity.

2. Method according to Claim 1, characterized in that the operating speed (n) of the rotor is reduced such that the load level acting on the rotor of the wind turbine remains approximately constant or is reduced when the wind velocity rises above the wind velocity which is in danger of producing overloading.

3. Method according to Claim 1 or 2, characterized in that the reduction in operating speed is associated with a change in power matched to the load level.

4. Wind turbine with pitch control, characterized by a means for automatic power and rotor-speed reduction when a wind velocity is reached which is in danger of overloading the wind turbine, in dependence on the rise in the wind velocity or incident-stream velocity or the true or relative wind velocity.

## Revendications

1. Procédé pour exploiter une centrale éolienne avec réglage Pitch, la puissance de la centrale éolienne ainsi que le régime de service étant réduits de façon continue en fonction de l'augmentation de la vitesse du vent ou de la vitesse de soufflage à partir d'une vitesse de vent qui représente un risque pour la centrale éolienne par surcharge.

2. Procédé selon la revendication 1, caractérisé en ce que le(s) régime(s) de service du rotor est (sont) réduit(s) de telle façon que le niveau de charge agissant sur le rotor de la centrale éolienne reste approximativement constant ou soit réduit avec une vitesse de vent croissante au-dessus de la vitesse de vent représentant un risque par surcharge.

3. Procédé selon la revendication 1 ou 2, caractérisé en ce que la réduction du régime de service est liée à une modification de la puissance adaptée au niveau de charge.

4. Centrale éolienne avec réglage Pitch, caractérisée par un dispositif pour réduire automatiquement le régime de puissance et le régime du rotor à partir d'une vitesse représentant un risque pour la centrale éolienne par surcharge en fonction de l'augmentation de la vitesse du vent ou de soufflage et de la vitesse du vent réelle ou relative.

Fig. 1

_Fig.2_

_Fig.3_